# EUROPEAN PATENT SPECIFICATION

(11) **EP 4 175 906 B1**
(45) Date of publication and mention of the grant of the patent: **31.07.2024**
(21) Application number: 21737425.5
(22) Date of filing: 28.06.2021
(51) Int. Cl.: B66C 3/00, B66C 13/16

(54) **ROTATOR FOR A TOOL**
ROTATOR FÜR EIN WERKZEUG
DISPOSITIF DE ROTATION POUR UN OUTIL

(30) Priority: 03.07.2020 SE 2050836
(43) Date of publication of application: 10.05.2023
(73) Proprietor: Indexator Rotator Systems AB, 922 21 Vindeln (SE)
(72) Inventor: HARR, Joakim, 922 32 VINDELN (SE)
(74) Representative: Ehrner & Delmar Patentbyrå AB
(86) International application number: PCT/EP2021/067736
(87) International publication number: WO 2022/002871

(56) References cited:
- EP-A1- 2 460 758
- EP-A1- 3 504 145
- EP-A1- 3 644 026

## Description

### Technical Field

The invention relates to a rotator for a tool, such as a jib-carried tool.

### Background

Between a crane arm tip and a jib-carried tool, a rotator can be arranged so that the tool can be rotated in respect to the crane arm tip. A grapple is an example of such a tool and another non-limiting example of a jib-carried tool is a harvester for harvesting trees. The crane system often comprises two or three crane arm parts connected to each other by crane arm joints.

Rotators come in a number of different types and the most common types are electric and hydraulic rotators. This means that the first type is electrically powered whilst the latter type is powered by hydraulic fluid. Rotators are used all over the world besides in forestry, such as in general cargo handling and material handling in ports and scrap yards.

Furthermore, in some rotator applications the weight of the object carried by the rotator needs to be determined. Therefore, different types of weighing devices for rotators have been presented. One example of such a weighing device is a weighing link that is arranged between the crane tip and the rotator. Thereby, the weight of the load held by the rotator can be derived.

Document EP 3 504 145 A1 discloses a rotator according to the preamble of claim 1. Document EP 2 460 758 A1 discloses a rotator. Document EP 3 644 026 A1 discloses a weighing link for a rotator.

### Summary

An objective of embodiments of the invention is to provide a solution which mitigates or solves the drawbacks and problems of conventional solutions.

Another objective of embodiments of the invention is to provide a compact rotator in its axial extension which can measure the weight of an external load passing through rotator.

The above and further objectives are solved by the subject matter of the independent claims. Further advantageous embodiments of the invention can be found in the dependent claims.

According to a first aspect of the invention, the above mentioned and other objectives are achieved with a rotator for a tool, the rotator comprising:
a stator;
a rotor rotatably arranged inside the stator;
a bearing configured to carry an external load; **characterized in that** further comprising:
   a lower link for attaching a tool to the rotator; and
   a load cell arranged between the bearing and the lower link, wherein the load cell is configured to indicate the external load.

The bearing may in embodiments of the invention refer to a separate bearing, i.e. constituted by a separate part from the rotor and stator. The external load may by be understood as an external load passing by or through the rotator. Hence, the load cell is configured to indicate the external load that is passing through the load cell. The load cell may also be denoted a load cell device.

In embodiments the load cell is an integrated part of the rotator since the load cell is arranged axially above the lower link in a first axial direction of the rotator. This may imply that the load cell itself makes part of the structure of the rotator, such that being arranged inside a common housing of the rotator. This further implies that the rotator does not function properly without the load cell. Hence, the load cell may be part of a supporting structure of the rotator. In embodiments, the rotator comprises a hydraulic motor for driving the rotator such as driving the rotor. In further embodiments, the rotator also comprises an upper link for connecting/attaching the rotator to a crane tip/arm.

An advantage of the rotator according to the first aspect is that the rotator can be made very compact in its axial extension. Further, the load cell is well protected since the load cell is part of the rotator structure. Moreover, since no weighing link between the rotator and the crane arm is needed according to embodiments of the invention easier installation of hoes protection devices in this area is possible and further that a braking link can be arranged between the rotator and the crane arm instead of a weighing link.

In an embodiment of a rotator according to the first aspect, the load cell is arranged between the bearing and a coupling interface of the lower link.

The coupling interface is the interface at which the tool is connected to the lower link. Hence, this embodiment implies that one or more strain gauges of the load cell are also arranged between the bearing and the coupling interface of the lower link.

In an embodiment of a rotator according to the first aspect, the rotator comprises torque transfer means configured to transfer torque generated by the rotor to the lower link via one or more torque transfer zones, wherein the load cell is arranged at least partially axially above the one or more torque transfer zones in a first axial direction of the rotator.

An advantage with this embodiment is that more accurate indications of the external load is provided since the load cell is not influenced by the torque produced by the motor of the rotator.

In an embodiment of a rotator according to the first aspect, the load cell comprises one or more strain gauges arranged axially above the one or more torque transfer zones in the first axial direction of the rotator.

The one or more strain gauges may provide the indications of the load that may be translated to a weight of the load. The one or more strain gauges may be circumferentially arranged at equidistance or non-equidistance from each other.

An advantage with this embodiment is that more accurate indications of the load can be provided since the one or more strain gauges are not influenced by the torque produced by the motor of the rotator.

In an embodiment of a rotator according to the first aspect, the load cell is arranged radially outside the rotor, and wherein the load cell and the rotor at least partially overlap with each other in an axial extension of the rotator.

An advantage with this embodiment is that a compact rotator in its axial extension is provided.

In an embodiment of a rotator according to the first aspect, the bearing is arranged radially outside the rotor and coupled to the stator.

An advantage with this embodiment is that a compact rotator in its axial extension is provided.

In an embodiment of a rotator according to the first aspect, the stator, the rotor, the bearing and the load cell form a common supporting structure of the rotator.

In an embodiment of a rotator according to the first aspect, the load cell comprises one or more load controlling means configured to control the external load applied on the load cell.

In an embodiment of a rotator according to the first aspect, the load cell is integrated with the lower link to form a common body with the lower link.

The load cell may be arranged in the upper part of the common body.

An advantage with this embodiment is that the rotator may be easier and cheaper to produce.

In an embodiment of a rotator according to the first aspect, the load cell is made up of a separate part axially coupled to the bearing and the lower link, respectively.

An advantage with this embodiment is that by having a separate part side loads and negative loads on the load cell can easier be mitigated or fully reduced.

In an embodiment of a rotator according to the first aspect, the load cell comprises a lower part coupled to the lower link and an upper part axially coupled to the bearing.

In an embodiment of a rotator according to the first aspect, the load cell is coupled to the lower link by means of one or more measuring bolts, and wherein one or more strain gauges are attached to each measuring bolt.

In an embodiment of a rotator according to the first aspect, wherein the measuring bolts extends from the lower link and engages with the upper part.

In an embodiment of a rotator according to the first aspect, the load cell is arranged to limit the movement of the lower link axially and radially.

An advantage with this embodiment is that the axial limitation act as an overload protection. The radial limitation is to hold the lower link correctly aligned along a center axis of the rotator and limit the influence of radial/side forces on the weight measurements of the load cell.

In an embodiment of a rotator according to the first aspect, the load cell comprises at least one of: a transmitter, a processing arrangement, a battery and a groove/channel for an electrical cable.

The processing arrangement may be configured to obtain an indication of the external load from the load cell; and determine a weight of the external load based on the obtained indication.

Thereby, an arrangement is provided in which all components and devices for providing measurements values of loads and the communication thereof is located in the load cell. Further applications and advantages of the embodiments of the invention will be apparent from the following detailed description.

### Brief Description of the Drawings

The appended drawings are intended to clarify and explain different embodiments of the invention in which:
- Fig. 1 shows a rotator in a first cross section view A-A according to embodiments of the invention;
- Fig. 2 and 3 show details of the rotator in Fig. 1 in perspective view;
- Fig. 4 shows a rotator in a first cross section view A-A according to embodiments of the invention;
- Fig. 5 shows the rotator in Fig. 4 in a second cross section view B-B partially in exterior view;
- Fig. 6 shows the underside of a rotator in an exterior perspective view according embodiments of the invention;
- Fig. 7 shows a rotator in a first cross section view A-A according to embodiments of the invention;
- Fig. 8 show details of the rotator in Fig. 7 in a perspective view;
- Fig. 9 shows a rotator in a first cross section view A-A according to embodiments of the invention;
- Fig. 10 and 11 show details of the rotator in Fig. 8 in perspective view; and
- Fig. 12 illustrates an example of an arrangement of crane arms, a rotator and a jib-carried tool.

### Detailed Description

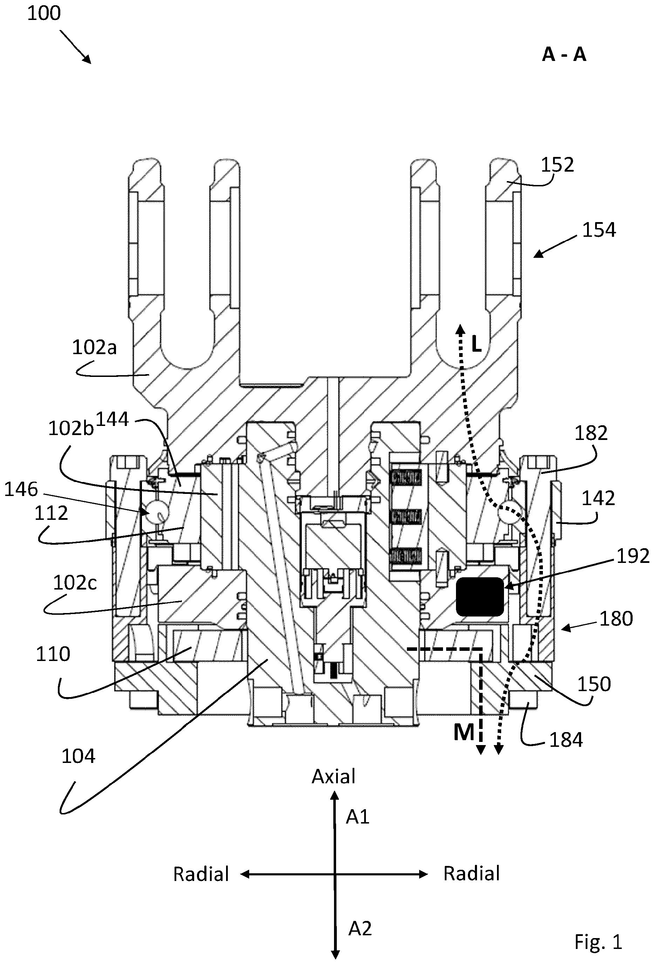

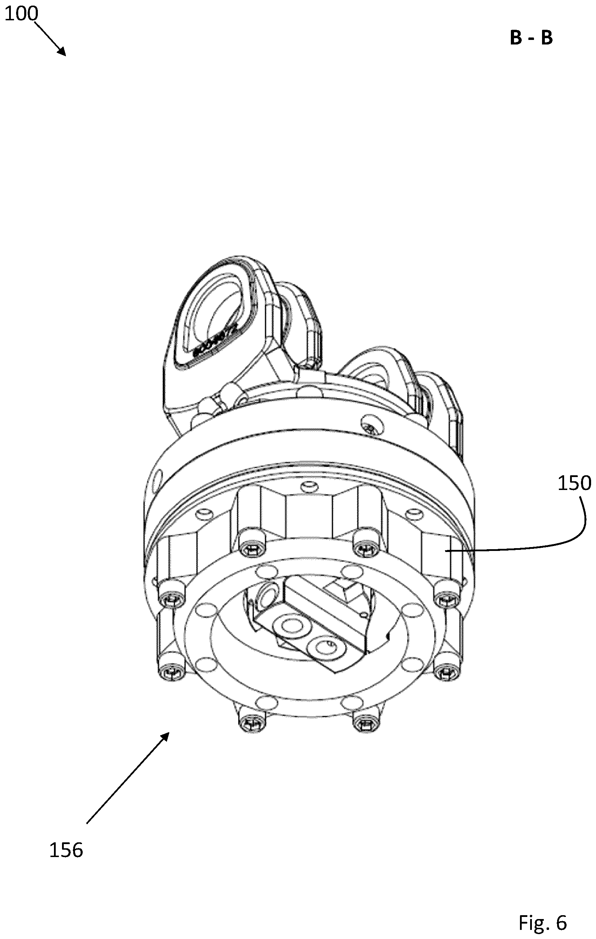

Fig. 1 shows a rotator 100 in a first cross section view A-A according to embodiments of the invention. The rotator 100 herein has an extension in a first A1 (also denoted upwards direction) and second A2 (also denoted downwards direction) axial directions, respectively, and in a radial direction. According to the embodiment shown in Fig. 1 the load cell 180 is made up of a separate part that is separate from the bearing 112 and the lower link 150 but still an integrated part of the rotator 100 such as the load cell 180 being arranged in a common or the same housing as the other parts of the rotator. Therefore, the rotator 100 in Fig. 1 comprises a stator 102 and a rotor 104 that is rotatably arranged inside the stator 102. As shown in Fig. 1, the stator 102 may include an upper stator part 102a, a stator ring or stator frame 102b and a lower stator part 102c. The rotator 100 further comprises a bearing 112 which is configured to carry an external load L of the rotator 100, i.e. an external load passing through the rotator 100. The rotator 100 also comprises a lower link 150 for attaching a tool 200 to the rotator 100. The lower link 150 hence comprises a coupling interface 156 (see Fig. 6) for coupling the lower link and therefore the rotator 100 to the tool. The coupling interface 156 comprises suitable engagement/attachment means and/or coupling means (e.g. electrical and hydraulic) in this respect.

For determining a load/weight, the rotator 100 comprises a load cell 180 which is integrated and/or a part of the rotator 100 to form a common supporting structure of the rotator together with the stator, the rotor and the bearing. The load cell 180 is arranged between the bearing 112 and the lower link 150 and is configured to indicate the external load L. Based on the external load L a weight can be determined/derived. The weight may e.g. refer to the weight of a tool, a weight of a tool and an object carried by the tool, etc.

In embodiments of the invention, the load cell 180 is arranged axially, fully or partially, between the bearing 112 and the lower link 150. In yet further embodiments of the invention, the load cell 180 is arranged between the bearing 112 and the coupling interface 156 of the lower link 150.

In further embodiments of the invention, the load cell 180 is arranged radially outside the rotor 104 and may be axially coupled to the bearing 112 and/or the lower link 150 which is also shown in Fig. 1. In this respect, the load cell 180 and the rotor 104 may at least partially overlap axially with each other for a very compact design in the axial extension of the rotator 100. The bearing 112 herein may in embodiments denote a separate bearing that is arranged radially outside the rotor 104 and being attached to the stator 102. The separate bearing can be an arrangement as shown in Fig. 1 having an outer ring 142 attached to the lower link 150, via the load cell 180, and the lower link 150 being arranged to be attached to the tool 200. The separate bearing 112 may also have an inner ring 144 which is attached to the stator 102. In between the outer ring 142 and the inner ring 144 a plurality of balls 146 may be arranged.

How the load L passes through the rotator 100 is also illustrated in Fig. 1. The load L passes from an upper link (not shown) through the upper stator part 102a of the rotator 100 to the bearing 112. The upper link is configured for attaching the rotator 100 to a crane arm 300. Many different attachment means are known in the art for attaching the rotator 100 to the upper link and the exemplary attachment means shown are attachment ears 152 comprising through holes 154 through which the latter a coupling pin (not shown) may be inserted. The upper link may also be attached to a crane arm via one or more further links, such as a braking link, universal joint/coupling, etc. From the bearing 112 the external load L passes through the load cell 180 via upper bolts 182 and lower bolts 184 to the lower link 150. In operation the lower link 150 is attached/coupled to a tool 200 for a specific rotator application.

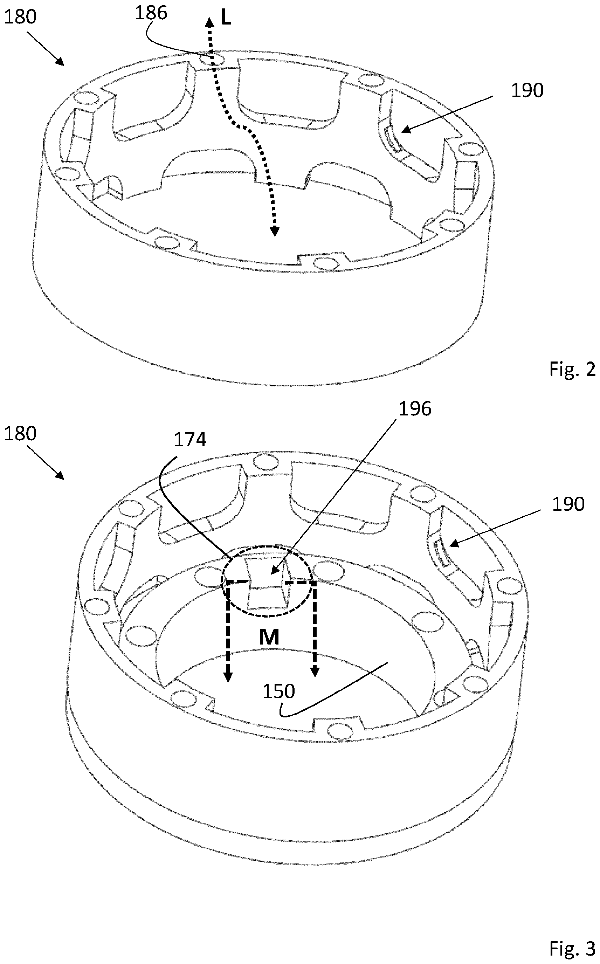

Moreover, the transfer of the torque M generated by the rotor 104 of the rotator 100 is also illustrated in Fig. 1. The rotator 100 in this respect comprises torque transfer means 110 configured to transfer torque M generated by the rotor 104 to the lower link 150 via one or more torque transfer zones 174, which is illustrated in Fig. 3. The torque transfer means 110 may be arranged radially around a section of the rotor 104 which axially extends outside of the stator 102. The torque transfer means 110 is configured to transfer torque M, e.g. by means of engagement means engaging in the rotor 104. The section of the rotor 104, around which the torque transfer means 110 is arranged, axially extends outside of the stator 102 in the lower part of the rotator 100.

Fig. 1 further discloses a processing arrangement 192 which is integrated in the rotator 100 (in the lower part of the stator in this example) and is coupled to the load cell 180 (the coupling is not shown in the Figs.) with suitable signal coupling means. The processing arrangement 192 is configured to receive one or more indications from the load cell 180, e.g. in the form of raw data or sensor data, e.g. electrical signals, and to compute/derive the weight of the external load L based on the received data and a suitable weight determination algorithm. The processing arrangement 192 may also be coupled to a memory of the rotator 100. The processing arrangement 192 may be referred to as one or more general-purpose central processing units (CPUs), one or more digital signal processors (DSPs), one or more application-specific integrated circuits (ASICs), one or more field programmable gate arrays (FPGAs), one or more programmable logic devices, one or more discrete gates, one or more transistor logic devices, one or more discrete hardware components, and one or more chipsets.

For providing more accurate weight values different sensors, such as accelerometers and temperature sensors, may also be arranged inside the rotator 100. By also considering sensor data/values more accurate and correct weight values can be provided since the sensor values can be used for mitigating or fully reducing weight determination distortion factors such as acceleration and temperature. It is however noted that the indication(s) from the load cell 180 may in embodiments be sent directly to a processor device/arrangement of a machine/vehicle supporting the crane arm via wired or wireless communication for processing and hence derive the weight of the load L.

Fig. 2 and 3 show the load cell 180 of the rotator in Fig. 1 in perspective view. Especially the transfer of load L and torque M in the rotator 100 is illustrated in Fig. 2 and 3.

Fig. 2 illustrates how the load L passes through load cell 180 via upper through holes and lower through holes, or rather via corresponding upper and lower bolts in operation. Therefore, in this embodiment the load cell 180 is coupled to the bearing 112 by means of one or more upper through holes 186 and one or more corresponding upper bolts 182. The load cell 180 is further coupled to the lower link 150 by means of one or more lower through holes 188 and one or more corresponding lower bolts 184. Furthermore, one or more strain gauges 190 are arranged in the load cell 180 at suitable positions inside or at the load cell 180. However, only one strain gauge 190 is shown in Fig. 2 and 3.

Fig. 3 shows the load cell 180 and the lower link 150. The lower link 150 comprises one or more engagement means 196 that are configured to engage with corresponding engagement means (not shown) on the torque transfer means 110. Thereby, the torque generated by the rotor 104 is transferred via the torque transfer means 110 and the engagement means 196 to the lower link 150 in operation. Hence, one or more torque transfer zones 174 are formed in the rotator 100 at and/or around the location of the engagement means 196. In other words, the rotator 100 comprises torque transfer means 110 configured to transfer torque M generated by the rotor 104 to the lower link 150 via one or more torque transfer zones 174.

It is also illustrated in Fig. 2 and 3 that the load cell 180 is arranged axially above the one or more torque transfer zones 174 in a first axial direction A1 of the rotator 100. Therefore, in embodiments of the invention, the one or more strain gauges 190 are arranged axially above one or more torque transfer zones 174 in the first axial direction A1 of the rotator 100. This means that the one or more strain gauges are positioned in a section of the rotator 100 in which the external load L passes but where no torque M generated by the rotor 104 passes. The first axial direction A1 can also be denoted upwards direction of rotator 100 (in opposite direction to the gravitational force), in operation, which implies that the second axial direction A2 is denoted downwards direction of rotator 100 (along or parallel to the gravitational force), in operation. Hence, the first axial direction A1 is the direction towards the upper link and the second axial direction A2 is the direction towards the lower link 150.

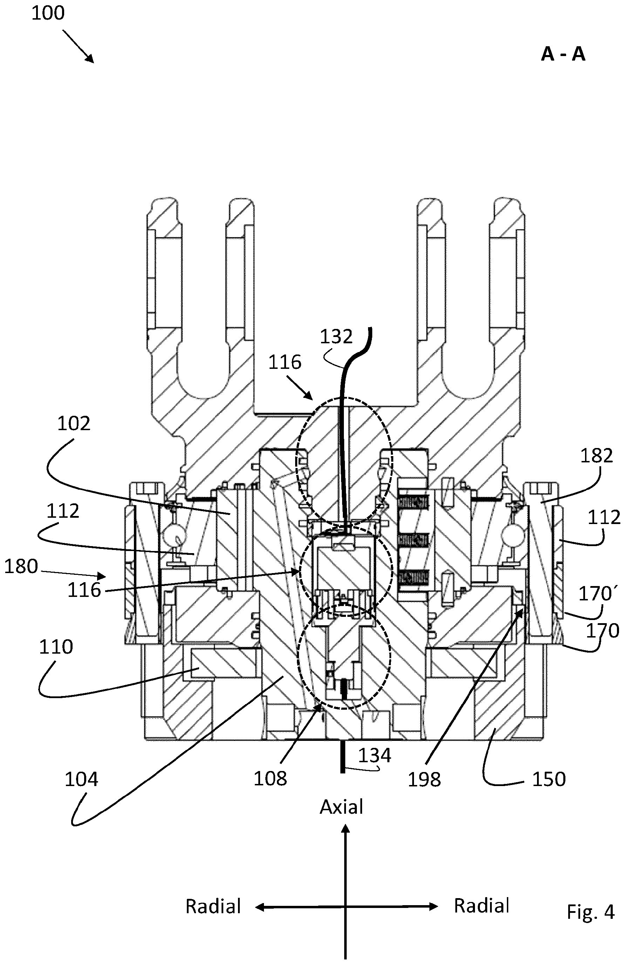

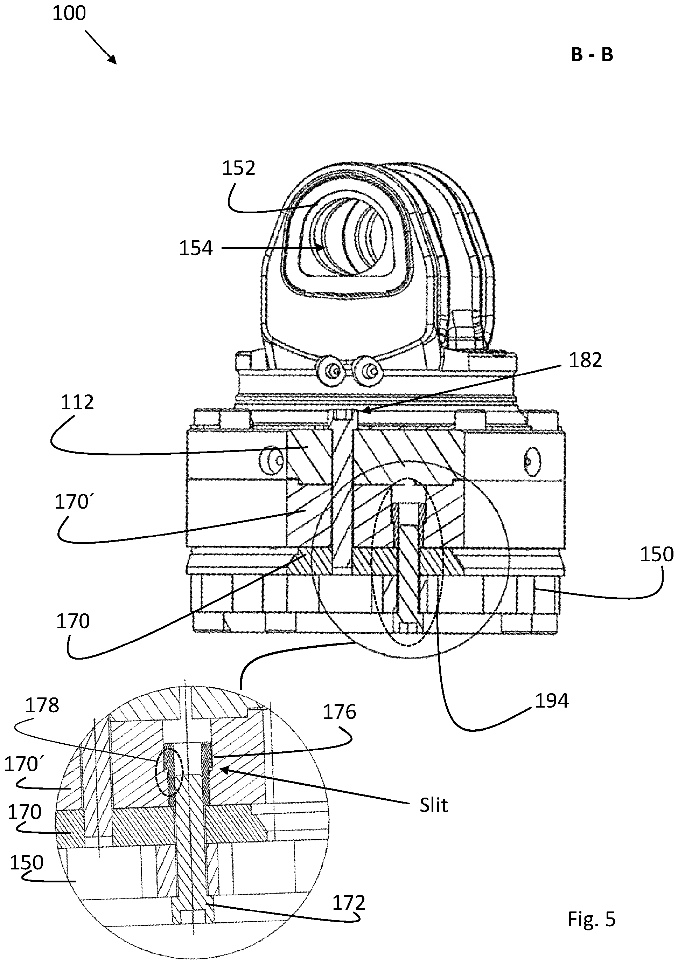

Fig. 4 shows a rotator 100 in a first cross section view A-A and Fig. 5 shows the rotator 100 in Fig. 4 in a second cross section view B-B and partially in an exterior view according to embodiments of the invention. According to this embodiment the load cell 180 is made up of a separate part and further comprises a lower part 170 coupled to the lower link and an upper part 170' coupled to the bearing 112. The upper part 170' will act as a load transfer means in this configuration of the rotator 100. One or more strain gauges may be attached at the lower part 170, e.g. along the radius of the lower part 170 and between the bolts (see Fig. 5). This embodiment therefore resembles the embodiment shown in Fig. 1 with the addition of the lower part 170 and the upper part 170', the latter being axially arranged between the bearing 112 and a lower part 170 of the load cell 180. Further, one or more guiding means 198 may be arranged between the upper part 170' and the lower link 150 as indicated in Fig. 4. The purpose of the guiding means 198 is to isolate the load cell 180 from side or radial loads for improved accuracy of weight determination of the external load L. Non-limiting examples of guiding means 198 may be a mechanical lip, edge, or collar.

Further, when a negative load is applied or acting on the rotator the upper surface of the lower part 170 will abut the lower surface of the upper part 170'. Thereby, the lower part 170 will not be bent which means that the strain gauge in the load cell 180 will is isolated from negative load of the upper part 170' according to this embodiment. This means less weight distortion and hence improved weighing accuracy.

According to further embodiments of the invention, the lower part 170 is made of a first material and upper part 170' is made of a second material different from the first material. In an example the first material is stainless steel and the second material is cast iron. Stainless steel is more suitable for producing load cells but is also more expensive compared to cast iron.

Fig. 5 further discloses the rotator 100 comprising one or more load controlling means 194 for controlling the external load applied on the load cell 180. Only one load controlling means 194 is illustrated but the rotator 100 may comprise a plurality of load controlling means 194 e.g. circumferentially arranged at the lower part of the rotator 100. Each load controlling means 194 may comprise a bolt 172 that extends from the lower link 150 freely up through the lower part 170 and up into the upper part 170' into bolt receiving means 176 arranged inside the upper part 170' of the load cell 180. The bolt receiving means 176 has engagement means configured to engage with corresponding engagement means of the bolt 172, e.g. inner threads engaging with outer threads of the bolt 172. The bolt receiving means 176 further has a mechanical step 178 at which a slit can be formed, and the height of the slit is dependent on the load applied. When an external load is applied the height of the slit decreases and at a given nominal threshold load the height of the slit is equal to zero and the amount of the external load exceeding the nominal threshold load will act on the upper part 170'. It should be noted that the nominal threshold load value is dependent on the height of the slit. Hence, by having an adjustable slit height the nominal threshold load value can also be adjustable.

This design with load controlling means 194 having a step and a slit has two implications. Firstly, by dimensioning the step 178 and slit the operating load interval of the load cell 180 can be controlled and designed. Secondly, when the slit is equal to zero the load controlling means 194 will function as an overload protection means for the load cell 180 since the lower part 170 will not be compressed further when the height of the slit is equal to zero.

Fig. 6 shows the underside of a rotator 100 in an exterior perspective view according to embodiments of the invention. The lower link 150 and its coupling interface 156 is clearly shown in Fig. 6. It is noted that the coupling interface 156 is arranged at the lower part and/or underside of the lower link 150 in embodiments of the invention. The tool 200 may e.g. be bolted to the lower link 150 or attached by means of any other coupling/attachment arrangement. Further, hydraulic connections or couplings for feeding hydraulic applications in the tool 200 are also shown.

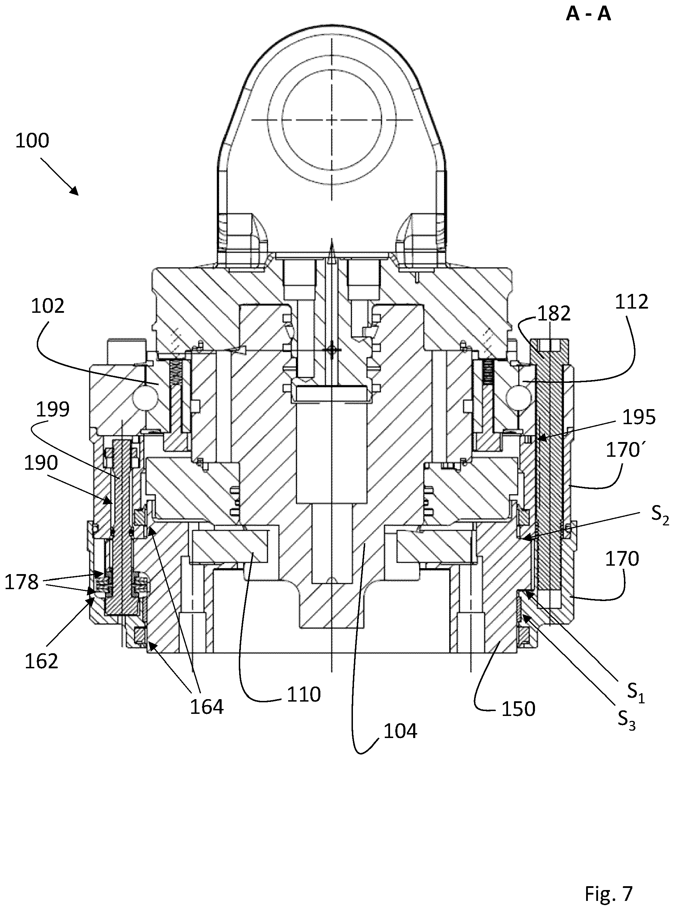

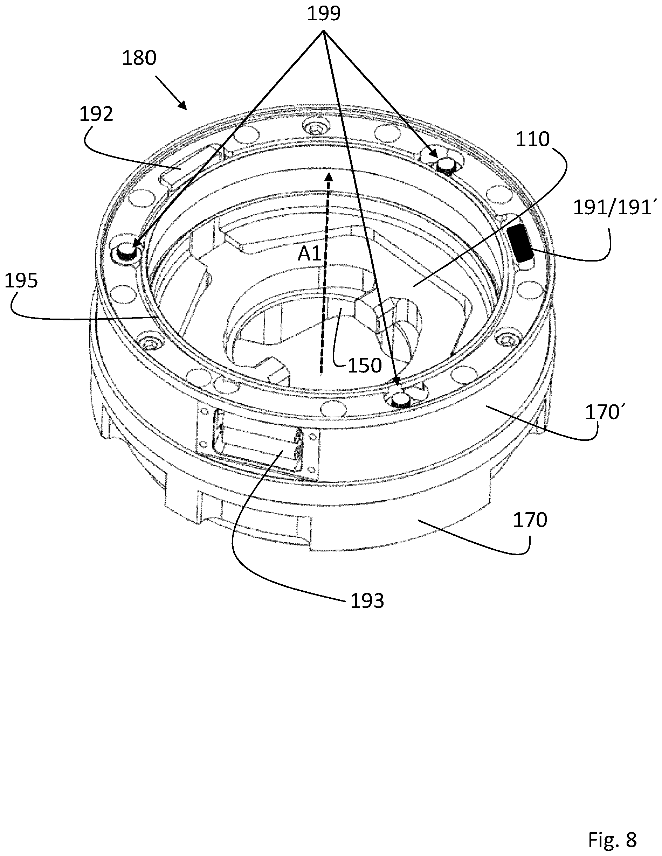

Fig. 7 shows a further embodiment of a rotator 100 according to the invention in a cross-sectional side view A-A while Fig. 8 shows a detail of the rotator 100 shown in Fig. 7. The load cell 180 is also in this embodiment coupled/attached to the lower link 150 via a lower part 170 and to the bearing 112 via an upper part 170'. The bearing is attached to the upper part 170' by means of through holes and corresponding upper bolts as previously explained. However, the general design differs from the previous embodiments shown in Fig. 4 and 5 in certain aspects. As noted from the rotator 100 shown Fig. 7 and 8, the load cell 180 is in this particular example coupled or attached to the lower link 150 by means of lower bolts also denoted measuring bolts 199. The measuring bolts 199 extends from the lower link 150 through the lower part 170 and engages with the upper part 170'. It is to be noted that the measuring bolts 199 moves freely in the lower part 170 of the load cell 180. The lower link 150 is in this embodiment suspended in the rotator via the measuring bolts 199 and supported by the measuring bolts 199.

The measuring bolts 199, three of them in this non-limiting example, are circumferentially arranged and at equidistance from each other at a certain radius of the rotator 100. Furthermore, at each measuring bolt 199 one or more strain gauges 190 are attached along the axial extension of the bolt 199 for providing strain gauge data to be processed for load determination. It has been verified that e.g. three strain gauges at each bolt gives data/information enough so that accurate weight values of the external load can be derived by a processing arrangement. The strain gauges may be attached axially at the measuring bolt 199 at equidistance from each other. However, the number of measuring bolts, the number of strain gauges and the layout of the strain gauges may vary depending on the application and accuracy requirements.

The embodiment shown in Fig. 7 and 8 also comprises a disc spring 162 arranged at each measuring bolt 199. The disc spring 162 radially encloses a lower section of the measuring bolt 199. The purpose of the disc springs 162 and associated guiding means is to hold/support the lower link 150 to a certain positive load interval. However, the lower link 150 will abut against at a mechanical step surface S₁ of the lower part 170 of the load cell 180 if a positive load is larger than a positive threshold load value for the disc spring. If a negative load is applied that is larger than a negative threshold load value for the disc spring, the lower link 150 will instead abut against a mechanical step surface S₂ of the upper part 170'. Thereby, the surfaces S₁ and S₂ will act as an overload protection for the load cell 180 against positive and negative overloads. It may also be noted that if a side or radial load is applied at the rotator 100, the lower link 150 will abut against axial surface S₃ of the lower part 170. Hence, the lower part 170 of the load cell 180 in these embodiments act as a mechanical limitation limiting the movement of the lower link 150 in its axial and radial directions. The axial limitation will act as an overload protection device as previously explained. The radial limitation will keep the lower link 150 axially aligned in relation to a centre axis of the rotator 100 and mitigate or reduce weighing distortion due to unwanted side or radial forces acting on the rotator. Thereby, improved measuring accuracy is provided since this design mitigates the effects of measuring distortion due to negative load, overload and side or radial load.

Further, for protecting the strain gauges 190 from hydraulic fluid of the rotator 100 that may leak and damage the strain gauges 190 multiple seals 164 may be arranged radially between the measuring bolts 199 and the inner hydraulic channels of the rotator 100 as shown in Fig. 7.

Moreover, for providing an even more compact design of a rotator in its axial extension, the load cell 180 as shown in Fig. 8 also comprises devices/components/units/entities/elements and their associated cavities/holders/housing necessary for obtaining strain gauge values and possible sensor values and providing measurement values for the external load based on the strain gauge values and the sensor values in the rotator itself. Therefore, the load cell 180 may without being limited thereto comprise:
- a processor arrangement 192 configured to receive and process the data/information from the one or more strain gauges and sensors 191 so as to provide measurement values for the external load based on such data/information e.g. by using a suitable load determination algorithm executed in the processor arrangement 192.
- a wireless or wired transmitter device 191 for transmitting the measurement values to a communication device located remote from the rotator 100, e.g. a control unit in a vehicle to which the rotator 100 is attached and/or to a remote server accessed through a wireless communication system, such as 3GPP 5G.
- further electrical units and sensors 191' such as accelerometers, angle meters, hydrometers, temperature sensors, etc.
- a battery 193 for powering electrical power consumers arranged inside the load cell, such as the processor arrangement 192. The battery may be rechargeable and should be easily accessible. Hence, the battery 193 may by be arranged in a housing (cover plate not shown) located at the outside of the load cell 180 as shown in Fig. 8.
- a groove or channel 195 for holding one or more power cables for powering and/or one or more signal cables for communication between different devices within the load cell 180. For a very neat and compact rotator design, the groove or channel 195 may be arranged at a certain radius of the load cell 180, e.g. in an inner radius as shown in Fig. 8 or an outer radius of the load cell 180.

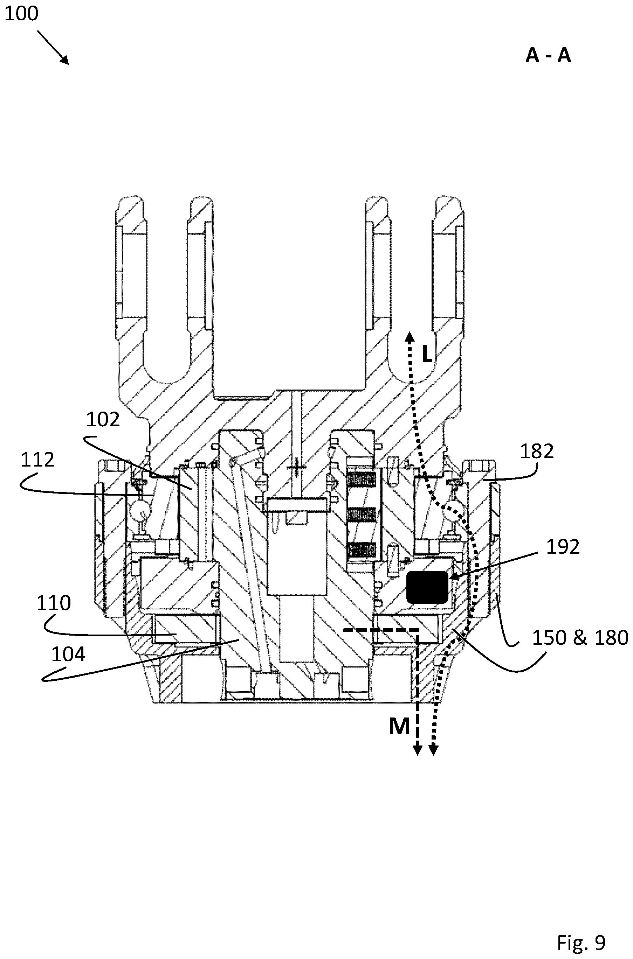

Fig. 9 shows a rotator 100 in a first cross section view A-A according to further embodiments of the invention. According to these embodiments the load cell 180 is integrated with the lower link 150 so as to form a common body 150, 180. The common body 150, 180 is attached/coupled to the bearing 112 by means of one or more upper through holes 186 and one or more corresponding upper bolts 182. As also seen in Fig. 9, the load cell 180 is arranged in the upper part of the common body 150, 180. Therefore, the one or more strain gauges 190 of the load cell 180 are arranged axially above the one or more torque transfer zones 174 in a first axial direction A1 of the rotator 100 as previously discussed. This imply that the load cell 180 and hence the strain gauges are arranged between the bearing 112 and the coupling interface of the lower link 150. Therefore, the one or more strain gauges 190 are arranged so as to detect the external load L carried by the rotator 100 but without being influenced by the torque M generated by the rotor 104 for improved weighing accuracy.

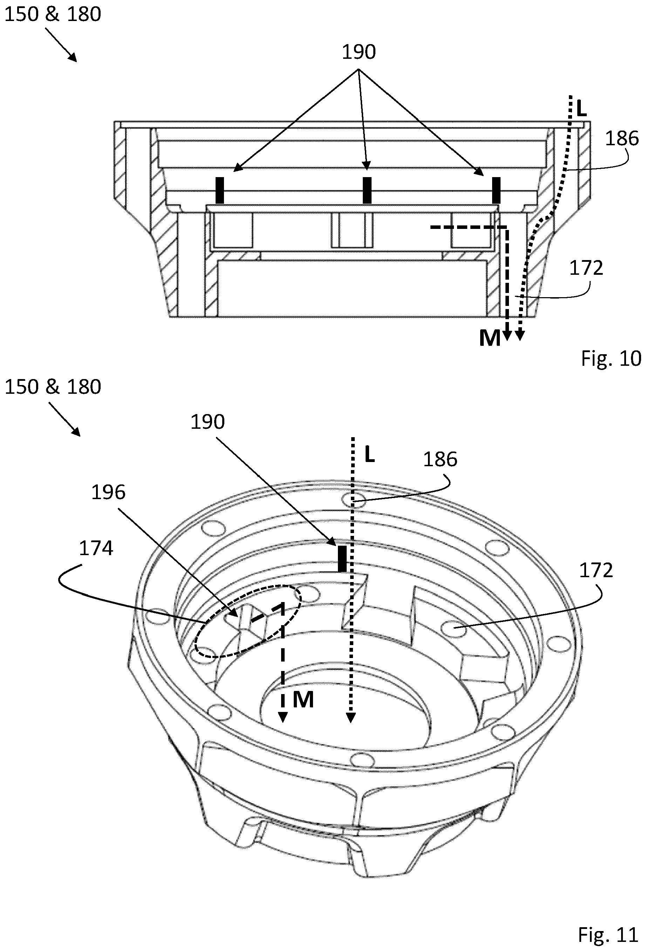

Fig. 10 and 11 show the common body 150, 180 more in detail in a cross-section view in Fig. 10 and in a perspective view in Fig 11. Especially the transfer of external load L and torque M in the rotator 100 are illustrated. It is shown in Fig. 10 and 11 how the external load L and the torque M passes though the common body 150, 180. The load L passes from the upper part to the lower part of the common body 150, 180 via upper and lower through holes, or rather through corresponding upper and lower bolts in operation. The torque M on the other hand passes through a torque transfer zone 174 at the engagement means 196 and downwards in the lower part of the common body 150, 180 to a tool 200. Hence, as noted from Fig. 10 and 11 the one or more strain gauges 190 are attached at the common body 150, 180 axially above the torque transfer zones 174.

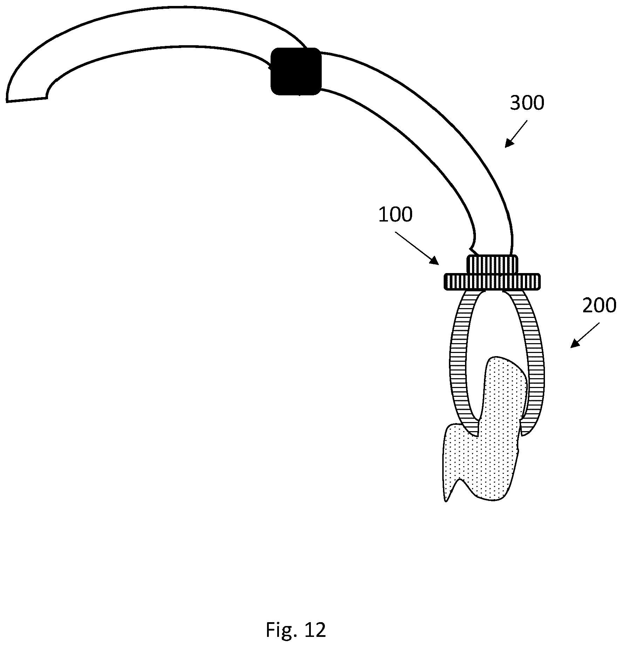

Fig. 12 illustrates an arrangement of a crane arm, a rotator and a jib-carried tool. An example of a crane arm 300 and a rotator 100 attached to the crane arm 300, e.g. via a universal joint/coupling also known as a cardan joint/coupling. A jib-carried tool 200 in the form of a grapple is attached to the rotator 100 and carries a piece of scrapple. Other types of tools can also be used. The tool and possible objects held by the tool makes up an external load which is to be carried by the rotator. Non-limiting examples are a harvester carrying a log, and a grapple and metal scrap. The crane arm 300 is supported by a vehicle or a mobile machine, e.g. excavators and heavy commercial vehicles such as trucks.

As previously stated, a rotator 100 according to embodiments of the invention can be made very compact in its axial extension. To provide a compact rotator 100 suitable for many diverse rotator applications the rotator 100 may also comprise an electrical swivel, a hydraulic swivel and/or an angle meter arranged inside the rotator 100 as disclosed in Fig. 4. In embodiments of the invention, the electrical swivel, the hydraulic swivel and/or the angle meter are arranged radially inside the rotor 104 and may be axially aligned to each other.

The electrical swivel 108 can herein be understood as a device or an arrangement that can provide electrical power at and through a rotational interface, e.g. between the stator 102 and the rotor 104. It is therefore also disclosed an upper electrical cable 132 and a lower electrical cable 134 connected to the electrical swivel 108 as shown in Fig. 4. However, the rotator 100 can comprise one or more upper electrical cables 132 and one or more lower electrical cables 134 even though only one is shown. The electrical cables can be arranged for electrical power transfer or for communication. The upper electrical cable 132 can hence be connected to a power source (not shown) which feeds electrical power or to a first communication device (not shown). The lower electrical cable 134 can be connected to one or more applications (not shown) in the tool 200 that consumes electrical power or arranged for electrical communication (e.g. via a CAN bus) in the form of one or more second communication devices (not shown) configured to communicate with one or more first communication devices. Non-limiting examples of such applications are processors, sensors, camera, etc. Further, the electrical swivel 108 can also feed the processor arrangement 192 which is connected to the load cell 180.

The angle meter 116 can herein be understood as a device or an arrangement that indicates or provides a (relative) rotation between the rotor 104 and the stator 102. The rotation can be given in an angle hence the name of the device. The indication of the rotation or the angle can be used in a number of different applications. For example, the rotation or the angle can be used for controlling the rotator 100 itself. Another exemplary application is for controlling the tool 200. Yet another application is for controlling the crane arm 300. Yet another application is for controlling the machine or vehicle on which the crane arm is attached. Therefore, the angle meter 116 may be communicatively coupled to a control arrangement (not shown). The communication between the angle meter 116 and the control arrangement may be performed using wireless and/or wired communications according to known communication protocols. For example, conventional communication buses, such as CAN buses, may be used. If using wireless communication the rotator 100 may comprise an antenna for such wireless communications. Further, the angle meter 116 can be powered by the electrical swivel 108 via a power cable. Also, the electrical swivel 108 may provide one or more signal cables to the angle meter 116 for wired communications.

The hydraulic swivel 114 can herein be understood as a device or an arrangement that is arranged to provide hydraulic fluid to one or more hydraulic applications in the tool 200 at or through a rotational interface. Therefore, the hydraulic swivel 114 can have upper hydraulic conduit (not shown) connected to a hydraulic source which feeds hydraulic fluid and lower hydraulic conduit connected to the one or more hydraulic applications in the tool 200. Usually, the rotator 100 also comprises hydraulic return conduits. In case the rotator 100 comprises a hydraulic swivel 114 mentioned hydraulic swivel 114 may be axially arranged above the electrical swivel 108 and/or the angle meter 116 inside the rotor 104. Therefore, the hydraulic swivel 114 may also be axially aligned with the electrical swivel 108 and/or the angle meter 116 inside the rotor 104 along the axis of rotation of the rotator 100 which also may be denoted centre axis of the rotator 100.

Finally, it should be understood that the invention is not limited to the embodiments described herein, but also relates to and incorporates all embodiments within the scope of the appended independent claims.

## Claims

1. A rotator (100) for a tool (200), the rotator (100) comprising:
a stator (102);
a rotor (104) rotatably arranged inside the stator (102);
a bearing (112) configured to carry an external load (L); **characterized in that** further comprising:
a lower link (150) for attaching a tool (200) to the rotator (100); and
a load cell (180) arranged between the bearing (112) and the lower link (150), wherein the load cell (180) is configured to indicate the external load (L).

2. The rotator (100) according to claim 1, wherein the load cell (180) is arranged between the bearing (112) and a coupling interface (156) of the lower link (150).

3. The rotator (100) according to claim 1 or 2, comprising torque transfer means (110) configured to transfer torque (M) generated by the rotor (104) to the lower link (150) via one or more torque transfer zones (174), wherein the load cell (180) is arranged at least partially axially above the one or more torque transfer zones (174) in a first axial direction (A1) of the rotator (100).

4. The rotator (100) according to claim 3, wherein the load cell (180) comprises one or more strain gauges (190) arranged axially above the one or more torque transfer zones (174) in the first axial direction (A1) of the rotator (100).

5. The rotator (100) according to any of the preceding claims, wherein the load cell (180) is arranged radially outside the rotor (104), and wherein the load cell (180) and the rotor (104) at least partially overlap with each other in an axial extension of the rotator (100).

6. The rotator (100) according to any one of the preceding claims, wherein the bearing (112) is arranged radially outside the rotor (104) and coupled to the stator (102).

7. The rotator (100) according to any one of the preceding claims, wherein the stator (102), the rotor (104), the bearing (112) and the load cell (180) form a common supporting structure of the rotator (100).

8. The rotator (100) according to any one of the preceding claims, wherein the load cell (180) comprises one or more load controlling means (194) configured to control the external load (L) applied on the load cell (180).

9. The rotator (100) according to any one of claims 1 to 8, wherein the load cell (180) is integrated with the lower link (150) to form a common body (150, 180) with the lower link (150).

10. The rotator (100) according to any one of claims 1 to 8, wherein the load cell (180) is made up of a separate part axially coupled to the bearing (112) and the lower link (150), respectively.

11. The rotator (100) according to claim 10, wherein the load cell (180) comprises a lower part (170) coupled to the lower link (150) and an upper part (170') axially coupled to the bearing (112).

12. The rotator (100) according to claim 11, wherein the load cell (180) is coupled to the lower link (150) by means of one or more measuring bolts (199), and wherein one or more strain gauges (190) are attached to each measuring bolt (199).

13. The rotator (100) according to claim 12, wherein the measuring bolts (199) extends from the lower link (150) and engages with the upper part (170').

14. The rotator (100) according to any one of claims 10 to 13, wherein the load cell (180) is arranged to limit the movement of the lower link (150) axially and radially.

15. The rotator (100) according to any one of claims 11 to 14, wherein the load cell (180) comprises at least one of: a transmitter (191), a processing arrangement (192), a battery (193) and a groove/channel (195) for an electrical cable.

## Patentansprüche

1. Rotator (100) für ein Werkzeug (200), wobei der Rotator (100) Folgendes umfasst:
einen Stator (102);
einen Rotor (104), der innerhalb des Stators (102) angeordnet ist;
ein Lager (112), das dazu ausgelegt ist, eine externe Last (L) zu tragen; **dadurch gekennzeichnet, dass** er ferner Folgendes umfasst:
ein unteres Glied (150) zum Befestigen eines Werkzeugs (200) am Rotator (100) und
eine Wägezelle (180), die zwischen dem Lager (112) und dem unteren Glied (150) angeordnet ist, wobei die Wägezelle (180) dazu ausgelegt ist, die externe Last (L) anzuzeigen.

2. Rotator (100) nach Anspruch 1, wobei die Wägezelle (180) zwischen dem Lager (112) und einer Kupplungsschnittstelle (156) des unteren Glieds (150) angeordnet ist.

3. Rotator (100) nach Anspruch 1 oder 2, umfassend eine Drehmomentübertragungseinrichtung (110), die dazu ausgelegt ist, ein vom Rotor (104) erzeugtes Drehmoment (M) über einen oder mehrere Drehmomentübertragungsbereiche (174) zum unteren Glied (150) zu übertragen, wobei die Wägezelle (180) zumindest teilweise axial über dem einen oder den mehreren Drehmomentübertragungsbereichen (174) in eine erste Axialrichtung (A1) des Rotators (100) angeordnet ist.

4. Rotator (100) nach Anspruch 3, wobei die Wägezelle (180) einen oder mehrere axial über dem einen oder den mehreren Drehmomentübertragungsbereichen (174) in die erste Axialrichtung (A1) des Rotators (100) angeordnete(n) Dehnungsmesser (190) umfasst.

5. Rotator (100) nach einem der vorstehenden Ansprüche, wobei die Wägezelle (180) radial außerhalb des Rotors (104) angeordnet ist und wobei die Wägezelle (180) und der Rotor (104) einander in eine Axialausdehnung des Rotators (100) zumindest teilweise überlagern.

6. Rotator (100) nach einem der vorstehenden Ansprüche, wobei das Lager (112) radial außerhalb des Rotors (104) angeordnet und mit dem Stator (102) gekoppelt ist.

7. Rotator (100) nach einem der vorstehenden Ansprüche, wobei der Stator (102), der Rotor (104), das Lager (112) und die Wägezelle (180) eine gemeinsame Stützstruktur des Rotators (100) ausbilden.

8. Rotator (100) nach einem der vorstehenden Ansprüche, wobei die Wägezelle (180) eine oder mehrere zur Steuerung der auf die Wägezelle (180) aufgebrachten externen Last (L) ausgelegte Laststeuerungseinrichtungen (194) umfasst.

9. Rotator (100) nach einem der Ansprüche 1 bis 8, wobei die Wägezelle (180) in das untere Glied (150) integriert ist, um mit dem unteren Glied (150) einen gemeinsamen Körper (150, 180) auszubilden.

10. Rotator (100) nach einem der Ansprüche 1 bis 8, wobei die Wägezelle (180) aus einem separaten Teil besteht, das mit dem Lager (112) bzw. dem unteren Glied (150) axial gekoppelt ist.

11. Rotator (100) nach Anspruch 10, wobei die Wägezelle (180) einen unteren Teil (170), der mit dem unteren Glied (150) gekoppelt ist, und einen oberen Teil (170'), der mit dem Lager (112) axial gekoppelt ist, umfasst.

12. Rotator (100) nach Anspruch 11, wobei die Wägezelle (180) mittels eines oder mehrerer Messbolzen (199) mit dem unteren Glied (150) gekoppelt ist und wobei ein oder mehrere Dehnungsmesser (190) an jedem Messbolzen (199) befestigt ist/sind.

13. Rotator (100) nach Anspruch 12, wobei sich der Messbolzen (199) vom unteren Glied (150) erstreckt und in den oberen Teil (170') eingreift.

14. Rotator (100) nach einem der Ansprüche 10 bis 13, wobei die Wägezelle (180) dazu angeordnet ist, die Bewegung des unteren Glieds (150) axial und radial einzuschränken.

15. Rotator (100) nach einem der Ansprüche 11 bis 14, wobei die Wägezelle (180) mindestens eines der folgenden Elemente umfasst: einen Signalgeber (191), eine Verarbeitungsanordnung (192), eine Batterie (193) und eine Nut/einen Kanal (195) für ein Kabel.

## Revendications

1. Rotateur (100) pour un outil (200), le rotateur (100) comprenant :
un stator (102) ;
un rotor (104) disposé de manière rotative à l'intérieur du stator (102) ;
un palier (112) conçu pour supporter une charge externe (L) ; **caractérisé en ce qu'**il comprend en outre :
un organe de liaison inférieur (150) pour attacher un outil (200) au rotateur (100) ; et
un capteur de force (180) disposé entre le palier (112) et l'organe de liaison inférieur (150), le capteur de force (180) étant conçu pour indiquer la charge externe (L).

2. Rotateur (100) selon la revendication 1, dans lequel le capteur de force (180) est placé entre le palier (112) et une interface d'accouplement (156) de l'organe de liaison inférieur (150).

3. Rotateur (100) selon la revendication 1 ou 2, comprenant des moyens de transfert de couple (110) conçus pour transférer un couple (M) généré par le rotor (104) à l'organe de liaison inférieur (150) par le biais d'une ou de plusieurs zones de transfert de couple (174), dans lequel le capteur de force (180) est placé au moins partiellement axialement au-dessus de la ou des zones de transfert de couple (174) dans une première direction axiale (A1) du rotateur (100).

4. Rotateur (100) selon la revendication 3, dans lequel le capteur de force (180) comprend une ou plusieurs jauges de déformation (190) placées axialement au-dessus de la ou des zones de transfert de couple (174) dans la première direction axiale (A1) du rotateur (100).

5. Rotateur (100) selon l'une quelconque des revendications précédentes, dans lequel le capteur de force (180) est placé radialement à l'extérieur du rotor (104), et dans lequel le capteur de force (180) et le rotor (104) se chevauchent au moins partiellement sur une étendue axiale du rotateur (100).

6. Rotateur (100) selon l'une quelconque des revendications précédentes, dans lequel le palier (112) est placé radialement à l'extérieur du rotor (104) et accouplé au stator (102).

7. Rotateur (100) selon l'une quelconque des revendications précédentes, dans lequel le stator (102), le rotor (104), le palier (112) et le capteur de force (180) forment une structure de support commune du rotateur (100).

8. Rotateur (100) selon l'une quelconque des revendications précédentes, dans lequel le capteur de force (180) comprend un ou plusieurs moyens de régulation de charge (194) conçus pour réguler la charge externe (L) appliquée au capteur de force (180).

9. Rotateur (100) selon l'une quelconque des revendications 1 à 8, dans lequel le capteur de force (180) est intégré à l'organe de liaison inférieur (150) pour former un corps commun (150, 180) avec l'organe de liaison inférieur (150).

10. Rotateur (100) selon l'une quelconque des revendications 1 à 8, dans lequel le capteur de force (180) est constitué d'une partie distincte accouplée axialement au palier (112) et à l'organe de liaison inférieur (150), respectivement.

11. Rotateur (100) selon la revendication 10, dans lequel le capteur de force (180) comprend une partie inférieure (170) accouplée à l'organe de liaison inférieur (150) et une partie supérieure (170') accouplée axialement au palier (112).

12. Rotateur (100) selon la revendication 11, dans lequel le capteur de force (180) est accouplé à l'organe de liaison inférieur (150) au moyen d'un ou de plusieurs boulons de mesure (199), et dans lequel une ou plusieurs jauges de déformation (190) sont attachées à chaque boulon de mesure (199).

13. Rotateur (100) selon la revendication 12, dans lequel les boulons de mesure (199) s'étendent à partir de l'organe de liaison inférieur (150) et entrent en prise avec la partie supérieure (170').

14. Rotateur (100) selon l'une quelconque des revendications 10 à 13, dans lequel le capteur de force (180) est prévu pour limiter le mouvement de l'organe de liaison inférieur (150) axialement et radialement.

15. Rotateur (100) selon l'une quelconque des revendications 11 à 14, dans lequel le capteur de force (180) comprend au moins un élément parmi : un émetteur (191), un système de traitement (192), une batterie (193) et une rainure/un canal (195) pour un câble électrique.
